# EUROPÄISCHE PATENTANMELDUNG

(11) **EP 0 701 109 A2**
(43) Veröffentlichungstag der Anmeldung: **13.03.1996**
(21) Anmeldenummer: 95112728.1
(22) Anmeldetag: 12.08.1995
(51) Int. Cl.: G01F 15/06

(54) **Wasserzähler**

(30) Priorität: 16.08.1994 DE 4428996
(71) Anmelder: Hydrometer Gesellschaft mbH, D-91522 Ansbach (DE)
(72) Erfinder: Ziegler, H., Prof. Dr., 33100 Paderborn (DE); Dietz, Gerhard, 91586 Lichtenau (DE); Eff, Ulrich, 91567 Herrieden (DE); Geissler, Emil,, 91555 Feuchtwangen (DE); Ibel, Karl-Heinz,, 91522 Ansbach (DE); Schulze, Manfred,, 91522 Ansbach (DE); Stefke, Frank,, 97258 Gollhofen (DE); Oeder, Ottmar,, 91617 Oberdachstetten (DE)
(74) Vertreter: Matschkur, Götz, Lindner Patent- und Rechtsanwälte

(57) **Zusammenfassung**

Wasserzähler mit einer in einem ersten Gehäusebereich angeordneten Meßeinrichtung, insbesondere einem Flügelrad, zur Volumen- oder Mengenmessung und einer in einem zweiten Gehäusebereich angeordneten, mit der Meßeinrichtung zusammenwirkenden Zähl- und/oder Anzeigeeinrichtung, wobei die beiden Gehäusebereiche voneinander abgedichtet getrennt sind, mit einer mit der Zähl- und/oder Anzeigeeinrichtung zusammenwirkenden, aus einer Energiequelle gespeisten funktechnischen Sendeeinrichtung zum Aussenden des Zählerstandes an ein zentrales, entfernt angeordnetes Empfangssystem.

## Beschreibung

Die Erfindung betrifft einen Wasserzähler mit einer in einem ersten Gehäusebereich angeordneten Meßeinrichtung, insbesondere einem Flügelrad, zur Volumen- oder Mengenmessung und einer in einem zweiten Gehäusebereich angeordneten, mit der Meßeinrichtung zusammenwirkenden Zähl- und/oder Anzeigeeinrichtung, wobei die beiden Gehäusebereiche voneinander abgedichtet getrennt sind.

Zum periodischen Ablesen von in Haushalten installierten Wasserzählern ist es stets erforderlich, daß die ablesende Person unweigerlich die Wohnung betritt, was für den Wohnungsinhaber, da dieser ja präsent sein muß, aufwendig und störend ist, ferner stellt dies auch einen Eingriff in seine Privatsphäre dar. Zum anderen wird aufgrund der steigenden Zahl von Ein-Personen-Haushalten es für die Versorgungs- und Abrechnungsunternehmen immer aufwendiger und schwieriger, die erforderlichen Ablesungen durchzuführen, da die Zahl der abzulesenden Wasserzähler kontinuierlich steigt, womit ein erheblicher Mehraufwand an Zeit, Personal und damit Kosten verbunden ist. Zwar sind bereits drahtgebundene Übertragungssysteme des Zählerwertes bekannt, jedoch besitzen diese den Nachteil, daß sie für den nachträglichen Einbau bzw. Installation infolge des sehr hohen Aufwands kaum geeignet ist.

Der Erfindung liegt somit die Aufgabe zugrunde, einen in einem Haushalt zu installierenden Wasserzähler zu schaffen, der es dem Versorgungsunternehmen erlaubt, den Zählerstand sicher und mit möglichst kleinem Aufwand ohne Betreten der jeweiligen Wohnung des Endkunden abzulesen, und der einfach auch im Nachrüstverfahren installierbar ist.

Zur Lösung dieser Erfindung ist bei einem Wasserzähler mit den eingangs genannten Merkmalen erfindungsgemäß eine mit dem Zählwerk zusammenwirkende, aus einer Energiequelle gespeiste funktechnische Sendeeinrichtung zum Aussenden des Zählerstandes an ein zentrales, entfernt angeordnetes Empfangssystem vorgesehen.

Der erfindungsgemäße Wasserzähler sendet somit den Zählerstand an ein separates Empfangssystem, das beispielsweise zentral im Flur, Keller oder dergleichen des Hauses, beispielsweise eines mehrstöckigen Mietshauses, angeordnet ist, wo der Ablesende einfachst und ohne Betreten der jeweiligen Wohnungen den Zählerstand ablesen kann. Der Zählerstand kann in stochastischer Folge oder periodisch mehrmals täglich übertragen werden. Ist beispielsweise das Haus komplett mit derartigen Wasserzählern ausgerüstet, können alle Zähler gleichzeitig am Empfangssystem abgelesen werden, ohne daß überhaupt jemand anwesend sein muß. Ein weiterer Vorteil der Funkübertragung, die bei periodischem Betrieb beispielsweise in vorbestimmten Zeit- oder Mengenintervallen, beispielsweise jede Stunde oder pro hundert Liter, erfolgt, ist die Reduzierung der Ablesefehler durch automatisch gesicherte Datenübertragung. Ferner herrscht, da ohne Aufwand in kürzeren Abständen, z. B. monatlich, abgelesen werden kann, eine größere Gerechtigkeit bei Tarif- oder Mieterwechsel. Da keinerlei zusätzlich in der Wohnung zu installierenden Elemente erforderlich sind, ist der Wasserzähler auch mühelos im Nachrüstverfahren installierbar.

Um den Aufbau des erfindungsgemäßen Wasserzählers insbesondere für die Fertigung möglichst einfach zu gestalten, kann in weiterer Ausgestaltung der Erfindung vorgesehen sein, daß die Sendeeinrichtung eine die Sendeelemente, insbesondere eine Sendeantenne und gegebenenfalls die Zähl- und/oder Anzeigeeinrichtung tragende Platine aufweist, die einfachst in den oberen, zweiten Gehäusebereich eingesetzt wird.

In weiterer Ausgestaltung der Erfindung kann bei einem erfindungsgemäßen Wasserzähler, dessen Zähl- und/oder Anzeigeeinrichtung eine mechanische Einrichtung, vorzugsweise ein Rollenzählwerk ist, erfindungsgemäß eine Sensoreinrichtung mit einem Sensor zur Erfassung einer an der mechanischen Zähleinrichtung angeordneten, ein bestimmtes gezähltes Volumen oder Menge indizierenden Markierung oder dergleichen vorgesehen sein, wobei die Aussendung der Funksignale gegebenenfalls in Abhängigkeit von der Sensorerfassung erfolgen kann. Dabei kann der Sensor erfindungsgemäß ein gegebenenfalls mittels einer separaten, vorzugsweise über ein Übersetzungsgetriebe angetriebenen Welle betätigter Micro-Schalter sein, alternativ dazu können auch ein Opto-Schalter oder ein Reed-Schalter Anwendung finden. Erfindungsgemäß haben sich Opto-Schalter, die als Lichtschranken ausgebildet sind, als äußerst zweckmäßig erwiesen, wobei vorzugsweise zwei derartige Lichtschranken hintereinander geschaltet sind. Jede Lichtschranke sendet zeitlich versetzt ein separates Signal bei Detektion der Markierung aus, so daß in dem Fall, wenn Wasser durch den Zähler zurückfließt, was eine Rückwärtsrotation des Zählwerks und damit der Markierung mit sich bringt, diese anhand der von den Lichtschranken herrührenden Signale ermittelt werden kann. Dies ist dahingehend von Vorteil, daß der jeweilige, von der Rückwärtsrotation herrührende Zählerwert, der ja das Meßergebnis verfälschen würde, nicht mit in die Berechnung eingeht. Insbesondere zur Realisation der Lichtschranken-Alternative hat es sich als zweckmäßig erwiesen, wenn erfindungsgemäß eine Welle vorgesehen ist, die die Markierung oder eine die Markierung tragende Scheibe rotierend antreibt und die mit dem Zählwerk gekoppelt ist, wobei die Markierung im Rahmen der Rotation mit dem Sensor in Wirkungsverbindung tritt.

Eine zweite erfindungsgemäße Ausführungsalternative eines Wasserzählers, der eine elektronische Zähl- und/oder Anzeigeeinrichtung, insbesondere eine LCD-Einrichtung aufweist, die ein sie steuerndes, aus einer Energiequelle gespeistes elektronisches Steuerelement, vorzugsweise einen Microprozessor, umfaßt, ist erfindungsgemäß dergestalt, daß die Steuereinrichtung mit dem Steuerelement in Verbindung steht, wobei das Steuerelement den Sendebetrieb steuert. Auf diese Weise kann die Sendeeinrichtung einfachst und ohne größeren Aufwand integriert werden.

Im Rahmen der Erfindung kann ferner vorgesehen sein, daß die die Sendeeinrichtung speisende Energiequelle, insbesondere eine Batterie, im Inneren des Wasserzählers integriert ist, wobei bei dem die elektronische Zähl- und/oder Anzeigeeinrichtung aufweisenden Wasserzähler erfindungsgemäß die Speisung der Sendeeinrichtung aus der das Steuerelement und die elektronische Zähl- und/oder Anzeigeeinrichtung versorgenden Energiequelle erfolgt.

Um nun bereits installierte Wasserzähler der "alten" Art, also ohne Funkeinrichtung, mit einer derartigen aufzurüsten, oder um beispielsweise das Zählwerk zwecks Eichung oder dergleichen einfachst austauschen zu können, kann in weiterer Ausgestaltung der Erfindung vorgesehen sein, daß der zweite, die Zähl- und/oder Anzeigeeinrichtung und die Sendeeinrichtung und gegebenenfalls die Energiequelle und das Steuerelement tragende Gehäusebereich lösbar am ersten, die Meßeinrichtung enthaltenden Gehäusebereich angeordnet ist, so daß ein einfacher Austausch erfolgen kann.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: einen Schnitt durch einen erfindungsgemäßen Wasserzähler mit mechanischer Zähl- und/oder Anzeigeeinrichtung,
- Fig. 2: einen Schnitt durch einen erfindungsgemäßen Wasserzähler einer zweiten Ausführungsform mit mechanischer Zähl- und/oder Anzeigeeinrichtung,
- Fig. 3: eine Aufsicht, teilweise im Schnitt, des Wasserzählers aus Fig. 2,
- Fig. 4: einen Schnitt durch einen erfindungsgemäßen Wasserzähler einer dritten Ausführungsform mit mechanischer Zähl- und/oder Anzeigeeinrichtung,
- Fig. 5: eine Aufsicht, teilweise im Schnitt, des Wasserzählers aus Fig. 4,
- Fig. 6: einen Schnitt durch einen erfindungsgemäßen Wasserzähler einer vierten Ausführungsform mit mechanischer Zähl- und/oder Anzeigeeinrichtung,
- Fig. 7: eine teilweise Seitenansicht des Wasserzählers aus Fig. 6 in Richtung der Pfeile VII - VII aus Fig. 6, und
- Fig. 8: ein Einbindungsschema der Sendeeinrichtung in die Elektronik eines eine elektronische Zähl- und/oder Anzeigeeinrichtung aufweisenden Wasserzählers.

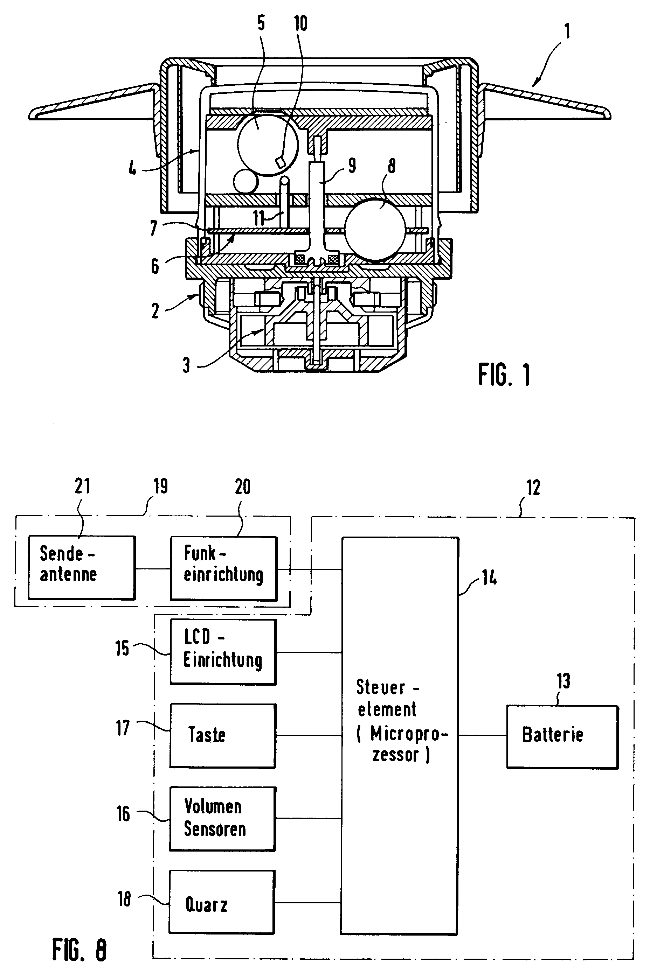

Fig. 1 zeigt einen Wasserzähler 1 mit einem ersten Gehäusebereich 2, in dem die Volumen- oder Mengenmeßeinrichtung 3 angeordnet ist, und mit einem zweiten Gehäusebereich 4, der im gezeigten Ausführungsbeispiel eine mechanische Zähleinrichtung 5 beinhaltet. Im Gehäusebereich 4 ist eine Sendeeinrichtung 6 angeordnet, bestehend aus einer Platine 7, auf der sämtliche für den Funkbetrieb erforderlichen Elemente und auch eine Funkantenne angeordnet sind. Die Sendeeinrichtung 6 wird über die ebenfalls im Gehäusebereich 4 integrierte Energiequelle 8 gespeist. Der Betrieb des Wasserzählers ist nun derart, daß die durch den Wasserfluß rotierende Meßeinrichtung 3 ihre Drehbewegung durch geeignete Kupplung, mechanisch oder magnetisch, an eine Welle 9 im Gehäusebereich 4 überträgt, über welche dann die Zähleinrichtung 5 in nicht näher dargestellter Weise angetrieben wird und so den Volumenfluß oder den Mengenverbrauch anzeigt. Um nun den Zählerstand erfassen zu können, um ihn zu senden, ist an der Zähleinrichtung, bei der es sich im gezeigten Beispiel um ein Rollenzählwerk handelt, an einer der Rollen eine Markierung 10 angeordnet, die beispielsweise nach jeder 360°-Drehung einen Mengenverbrauch von 100 Litern indiziert. Auf der Platine 7 ist zur Erfassung dieser Markierung 10 ein Sensor 11 angeordnet, der bei jedem Durchgang der Markierung 10 diese detektiert und entsprechend ein Signal an die Sendeeinrichtung 6 gibt. In dieser wird das Signal und damit der Zählerstand entweder gespeichert und aufsummiert, um in stochastischer oder periodischer Folge an ein nicht dargestelltes zentrales Empfangssystem unabhängig von dem Erfassungssignal gesendet zu werden. Jedoch kann der Sendebetrieb auch in Abhängigkeit des Zählwertsignals, die jeweilige 100-Liter-Periode angebend, erfolgen.

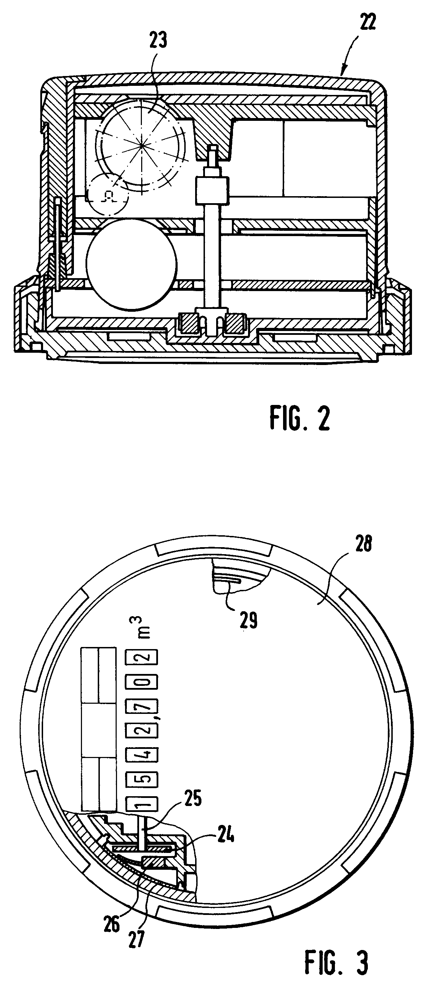

Fig. 2 zeigt einen Wasserzähler 22 einer zweiten Ausführungsform, der ebenfalls eine mechanische Zähleinrichtung 23 aufweist. Dieser Zähleinrichtung ist eine Reflexscheibe 24 zugeordnet (vgl. Fig. 3), die mechanisch mit dem Zählwerk 23 über eine Antriebswelle 25 gekoppelt ist, und die von der Zähleinrichtung 23, sofern diese betrieben wird, in Drehung versetzt wird. Je nachdem, an welcher der Zahlenrollen die Welle 25 angekoppelt ist, gibt sie durch eine Umdrehung immer das 10-fache des jeweiligen Rolleninkrements an, also beispielsweise wird bei Ankopplung an die rechte 1-Liter-Rolle mit einer Scheibenumdrehung eine verbrauchte Menge von 10 Litern angegeben. Der Reflexlichtscheibe, die mit entsprechenden Markierungen belegt ist, ist eine Reflexlichtschranke 26 gegenüberstehend zugeordnet, welche mit der Reflexscheibe 24 eine Lichtschranke bildet und so die entsprechenden Markierungen auf der Reflexscheibe 24 detektiert. Im Bereich der Reflexlichtschranke ist eine Abschirmung 27 angeordnet, die jegliche magnetische Beeinflussung der Signalerfassung und Übertragung abschirmt. Nach erfolgter Detektion der Markierungen werden entsprechende Signale je nach Betriebsmodus über die in diesem Beispiel direkt unterhalb eines das "Innenleben" des Wasserzählers abdeckenden Aufsteckschildes 28 angeordnete Antenne 29 ausgesendet.

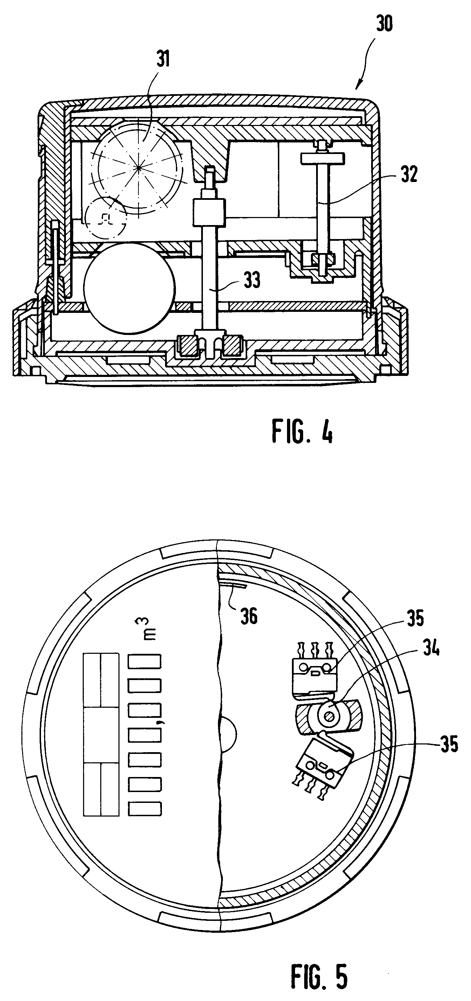

In Fig. 4 ist eine dritte Ausführungsform eines Wasserzählers 30 beschrieben, der ebenfalls eine mechanische Zähleinrichtung 31 besitzt. Die Mengenintervallerfassung erfolgt hier jedoch auf rein mechanischem Wege. Zu diesem Zweck ist eine vertikal stehende Welle 32 vorgesehen, die über ein nichtdargestelltes Übersetzungsgetriebe entweder direkt von der Welle 33 oder indirekt über das Rollenzählwerk 31 angetrieben wird. An der Welle 32 ist ein Schaltnocken 34 angeordnet, der bei Drehung der Welle 32 die beidseitig angeordneten Mikroschalter 35 betätigt. Mit jeder Betätigung eines der Schalter ist der Durchfluß einer vorbestimmten Wassermenge indiziert, wobei das jeweilige Mengenintervall von der Drehgeschwindigkeit der Welle 32 abhängt und durch entsprechende Ausgestaltung des Übersetzungsgetriebes eingestellt werden kann. Anstelle der beiden Mikroschalter 35 könnte selbstverständlich auch nur ein einzelner vorgesehen sein. Nach erfolgter Betätigung des jeweiligen Schalters wird auch hier ein Signal an die jeweilige Sendeeinrichtung gegeben, wonach die betriebsmodusabhängige Aussendung des jeweiligen Zählwertes mittels der auch in diesem Beispiel oberseitig angebrachten Antenne 36 erfolgt.

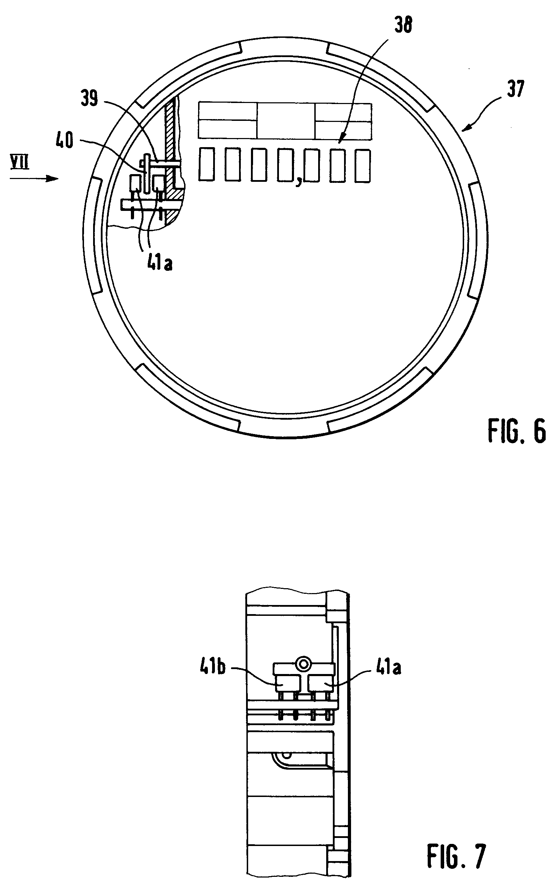

Fig. 6 zeigt eine weitere Ausführungsform eines Wasserzählers 37, der ebenfalls eine mechanische Zähleinrichtung 38 aufweist. An diese Zähleinrichtung 38 ist eine Welle 39 angekoppelt, die über die Zähleinrichtung 38 rotierend angetrieben wird. Am hinteren Ende ist ein senkrecht zur Welle 39 stehender Arm 40 angeordnet, der durch die Wellenrotation eine Kreisbewegung beschreibt. Dem Arm 40 sind zwei Gabellichtschranken 41a, 41b zugeordnet (vgl. Fig. 7), zwischen die der Arm 40 bei Drehung eintaucht. Mit jedem Eintauchen wird die jeweilige Lichtschranke 41a bzw. 41b unterbrochen, so daß der Durchlauf des Armes 40 detektiert wird. Durch die hintereinander geschaltete Anordnung zweier Gabellichtschranken wird im Falle eines Wasserrückflusses, wenn der Arm 40 ja in entgegengesetzte Richtung gedreht wird, dieser die Gabellichtschranke nochmals durchläuft und so ein weiteres, das vorbestimmte Mengenintervall indizierendens Signal abgegeben wird, eine fehlerhafte Messung verhindert, da jedes Signal zweifelsfrei aufgelöst werden kann. Dies hat zur Folge, daß, wenn der Arm 40 beim Durchgang zunächst von der Lichtschranke 41b, anschließend von der Lichtschranke 41a detektiert wird, und er anschließend rückwärts läuft, wiederum die Lichtschranke 41a als nächste ein Signal sendet, was jedoch bei normalem Vorwärtstrieb nicht möglich wäre. Auf diese Weise kann ein derart fehlerhaftes Signal ausgesondert werden, so daß die Mengenbestimmung davon nicht fehlerhaft beeinflußt wird. Die Anordnung zweier Lichtschranken ist selbstverständlich auch im Falle der Ausführungsform der Fig. 2 und 3 möglich, wobei auch die in den Fig. 4 und 5 gezeigte doppelte Microschalteranordnung diesem Zweck dienen kann.

Ein Wasserzähler mit elektronischer Zähl- und/oder Anzeigeeinrichtung ist im Vergleich zu den in den Fig. 1 bis 7 gezeigten mechanischen Beispielen derart aufgebaut, daß anstelle der mechanischen Zähleinrichtung eine elektronische Zähleinrichtung beispielsweise mit einer LCD-Anzeige angeordnet ist. Der Betrieb derselben erfolgt über ein Steuerelement, vorzugsweise einen Microprozessor, der über eine integrierte Batterie betrieben wird. Weiterhin erfolgt die Erfassung der Meßeinrichtungsrotation nicht in der Regel mechanisch, sondern elektrisch über Volumensensoren. Die Einbindung der Sendeeinrichtung in einen derartigen Wasserzähler ist nunmehr Fig. 8 zu entnehmen. Dabei ist im Bereich 12 die Elektronik des beschriebenen herkömmlichen elektronischen Wasserzählers dargestellt. Diese besteht aus einem über eine Batterie 13 betriebenen Microprozessor 14, der die LCD-Anzeige 15 steuert und mit zusätzlichen Elementen wie den Volumensensoren 16, einer Schalttaste 17 und einem externen Schwingquarz 18 in Verbindung steht. Dem Microprozessor 14 zugeschaltet ist der die Sendeeinrichtung darstellende Bereich 19, bestehend aus der Funkeinrichtung 20 und der Sendeantenne 21. Die Funkeinrichtung 20 steht direkt mit dem Microprozessor 14 in Verbindung und wird von diesem beispielsweise in einem vorbestimmten Zeittakt gesteuert und sendet so die der Funkeinrichtung 20 ebenfalls über den Microprozessor 14 zugeführten Meßergebnisse über die Antenne 21 an das zentrale Empfangssystem.

## Patentansprüche

1. Wasserzähler mit einer in einem ersten Gehäusebereich angeordneten Meßeinrichtung, insbesondere einem Flügelrad, zur Volumen- oder Mengenmessung und einer in einem zweiten Gehäusebereich angeordneten, mit der Meßeinrichtung zusammenwirkenden Zähl- und/oder Anzeigeeinrichtung, wobei die beiden Gehäusebereiche voneinander abgedichtet getrennt sind, gekennzeichnet durch eine mit der Zähl- und/oder Anzeigeeinrichtung (5, 12) zusammenwirkende, aus einer Energiequelle (8, 13) gespeiste funktechnische Sendeeinrichtung (6, 19) zum Aussenden des Zählerstandes an ein zentrales, entfernt angeordnetes Empfangssystem.

2. Wasserzahler nach Anspruch 1, dadurch gekennzeichnet, daß der Sendebetrieb in periodischer oder stochastischer Sendeabfolge erfolgt.

3. Wasserzähler nach Anspruch 1, dadurch gekennzeichnet, daß die Sendeeinrichtung (6) eine die Sendeelemente, insbesondere eine Sendeantenne und gegebenenfalls die Zähl- und/oder Anzeigeeinrichtung tragende Platine (7) aufweist.

4. Wasserzähler nach einem der Ansprüche 1 bis 3, gekennzeichnet durch eine im Wasserzähler integrierte Einrichtung zur Abschirmung der funktechnischen Sendeeinrichtung, derart, daß diese und damit der Sendebetrieb magnetisch nicht beeinflußbar ist.

5. Wasserzähler nach einem der Ansprüche 1 bis 4, wobei die Zähl- und/oder Anzeigeeinrichtung eine mechanische Einrichtung, vorzugsweise ein Rollenzählwerk ist, dadurch gekennzeichnet, daß die Sendeeinrichtung (6) einen Sensor (11) zur Erfassung einer gegebenenfalls an der mechanischen Zähleinrichtung (5) angeordneten, ein bestimmtes gezähltes Volumen oder Menge indizierenden Markierung (10) o.dgl. umfaßt, wobei die Aussendung des Funksignals gegebenenfalls in Abhängigkeit von der Sensorerfassung erfolgt.

6. Wasserzähler nach Anspruch 5, dadurch gekennzeichnet, daß der Sensor (11) ein gegebenenfalls mittels einer separaten, vorzugsweise über ein Übersetzungsgetriebe angetriebenen Welle betätigter Micro-Schalter ist.

7. Wasserzähler nach Anspruch 5, dadurch gekennzeichnet, daß der Sensor (11) ein Opto-Schalter oder ein Reed-Schalter ist.

8. Wasserzähler nach Anspruch 7, dadurch gekennzeichnet, daß der Opto-Schalter als Lichtschranke (26, 41a, 41b) ausgebildet ist, wobei vorzugsweise zwei derartige Lichtschranken (41a, 41b) hintereinander geschaltet sind.

9. Wasserzähler nach den Ansprüchen 5 und 7 oder 8, gekennzeichnet durch eine die Markierung (40) oder eine die Markierung tragende Scheibe (24) rotierend antreibende, mit der Zähleinrichtung (23, 38) gekoppelte Welle (25,, 39), wobei die Markierung im Rahmen der Rotation mit dem Sensor (26, 41a, 41b) in Wirkungsverbindung tritt.

10. Wasserzähler nach einem der Ansprüche 1 bis 4, wobei die Zähl- und/oder Anzeigeeinrichtung eine elektronische Einrichtung, insbesondere eine LCD-Einrichtung ist, die ein sie steuerndes, aus einer Energiequelle gespeistes elektronisches Steuerelement, vorzugsweise einen Microprozessor umfaßt, dadurch gekennzeichnet, daß die Sendeeinrichtung (19) mit dem Steuerelement (14) in Verbindung steht, wobei das Steuerelement (14) den Sendebetrieb steuert.

11. Wasserzahler nach einem der vorangehenden Ansprüche, dadurch gekennzeichnet, daß die die Sendeeinrichtung (6, 19) speisende Energiequelle (8, 13), insbesondere eine Batterie, im Inneren des Wasserzählers integrierte ist.

12. Wasserzahler nach einem der Ansprüche 1 bis 4 und 10, dadurch gekennzeichnet, daß die Speisung der Sendeeinrichtung (19) aus der die elektronische Zähl- und/oder Anzeigeeinrichtung und das Steuerelement versorgenden Energiequelle (13) erfolgt.

13. Wasserzahler nach einem der vorangehenden Ansprüche, dadurch gekennzeichnet, daß der zweite, die Zähl- und/oder Anzeigeeinrichtung und die Sendeeinrichtung und gegebenenfalls die Energiequelle und das Steuerelement tragende Gehäusebereich (4) lösbar am ersten, die Meßeinrichtung enthaltenden Gehäusebereich (2) angeordnet ist.
